# EUROPEAN PATENT SPECIFICATION

(11) **EP 1 953 046 B1**
(45) Date of publication and mention of the grant of the patent: **30.05.2012**
(21) Application number: 06822906.1
(22) Date of filing: 02.11.2006
(51) Int. Cl.: B60R 21/20

(54) **VEHICLE OCCUPANT RESTRAINT SYSTEM**
FAHRZEUGINSASSENRÜCKHALTESYSTEM
SYSTEME D' IMMOBILISATION D' UN OCCUPANT DANS UN VEHICULE

(30) Priority: 04.11.2005 JP 2005321097
(43) Date of publication of application: 06.08.2008
(73) Proprietor: Takata Corporation, Tokyo 106-8510 (JP)
(72) Inventor: UMEDA, Hideki, Tokyo 106-8510 (JP); NISHIKAWA, Atsushi, Kariya-shi Aichi 488-8666 (JP); KUROYANAGI, Teruji, Kariya-shi Aichi 488-8666 (JP); SAKAI, Yasunari, Kariya-shi Aichi 488-8666 (JP)
(74) Representative: Banzer, Hans-Jörg
(86) International application number: PCT/JP2006/321988
(87) International publication number: WO 2007/052756

(56) References cited:
- DE-U1-202004 004 020
- JP-A- 2003 095 052
- JP-A- 2004 058 848
- JP-A- 2004 175 179
- JP-A- 2004 175 179
- JP-A- 2004 338 542
- JP-A- 2004 338 542
- JP-A- 2005 145 392
- JP-A- 2005 219 714
- JP-A- 2005 219 714

## Description

### Field of the Invention

The present invention relates to a vehicle-occupant restraint system for restraining the head of a vehicle occupant, and more particularly, to a vehicle-occupant restraint system including an airbag that is inflated, for example, along a window of a side door when the vehicle encounters a side-on collision or a rollover.

### Background of the Invention

As an airbag for restraining the head of a vehicle occupant, an airbag is known which is disposed near the corner at the intersection of a ceiling and a side face of a vehicle compartment and which is inflated, for example, along a window of a side door by gas introduced from a gas inlet. This airbag is sometimes called a curtain airbag.

When a vehicle equipped with a vehicle-occupant restraint system including this curtain airbag encounters a side-on collision or a rollover, the curtain airbag is inflated toward the bottom of the vehicle body along a side face of the vehicle compartment, for example, along a door or a pillar, thus restraining the head of the occupant.

Japanese Unexamined Patent Application Publication No. 2003-95052 discloses that a portion at the rear end of the curtain airbag extending along a rear pillar is folded back toward the outer side of the vehicle compartment, and that the curtain airbag is then folded up into the shape of bellows along multiple creases extending in the front-rear direction.

When the airbag is folded in this procedure, it is folded up into the shape of bellows after the rear end thereof is folded back toward the outer side of the vehicle compartment. Therefore, the thickness of the rear end of the folded airbag in the inner-outer direction of the vehicle compartment increases vainly.

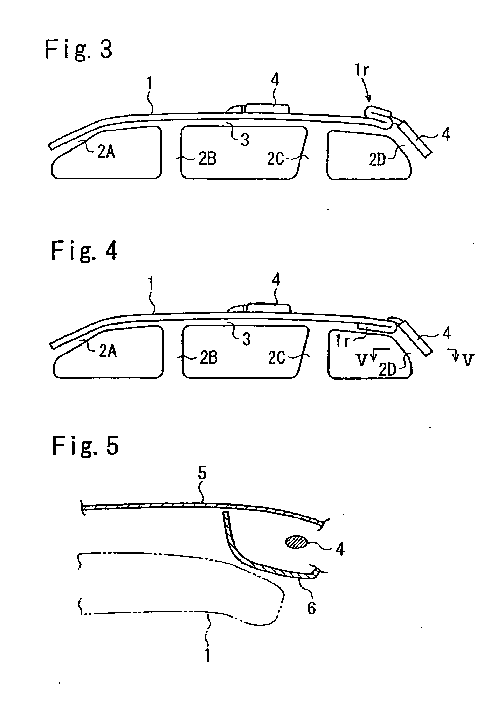

As another structure for folding the rear end of a curtain airbag, it has been proposed that a rear end portion 1r of a long and narrow folded unit obtained by folding a curtain airbag is folded down, as shown in Fig. 4. In Fig. 4, reference numerals 2A, 2B, 2C, and 2D denote an A-pillar, a B-pillar, a C-pillar, and a D-pillar of the vehicle body, respectively, reference numeral 3 denotes a roof side rail, and reference numeral 4 denotes a gas generator (inflator). Fig. 5 is a schematic cross-sectional view, taken along line V-V in Fig. 4, and reference numerals 5 and 6 denote a quarter glass and a D-pillar garnish, respectively.

When the rear end portion 1r of the folded unit of the curtain airbag 1 is folded down in two layers, as shown in Fig. 4, it interferes with the D-pillar garnish 6 when the airbag 1 is deployed, and this sometimes hinders the curtain airbag 1 from being smoothly deployed to a normal deployed position shown in Fig. 5.
A vehicle-occupant restraint system according to the preamble of independent claim 1 is known from JP 2004-338542 A1. Similar to the vehicle-occupant restraint system known from JP 2003-095052 A1, this vehicle-occupant restraint system comprises a folded airbag mounted along an upper peripheral edge of the window on a side face of a vehicle and an inflator for inflating the airbag, whereby the vehicle rear end portion of the airbag is folded upward in multiple layers.

### Summary of the Invention

An object of the present invention is to provide a vehicle-occupant restraint system that allows the rear end of an airbag to be deployed smoothly.

According to the present invention, this object is achieved by a vehicle-occupant restraint system as defined in claim 1. The dependent claims define preferred embodiments of the invention.

### Brief Description of Drawings

[Fig. 1] Figs. 1a, 1b, and 1c are side views showing a procedure for folding an airbag in a vehicle-occupant restraint system according to an embodiment.
[Fig. 2] Figs. 2a, 2b, and 2c are explanatory views showing the procedure for folding the airbag.
[Fig. 3] Fig. 3 is a side view of the interior of a vehicle equipped with the airbag.
[Fig. 4] Fig. 4 is an explanatory view showing the conventional art.
[Fig. 5] Fig. 5 is a cross-sectional view, taken along line V-V in Fig. 4.

### Detailed Description

In a vehicle-occupant restraint system according to the present invention, a rear end portion of an airbag is folded upward a plurality of times, preferably, into three layers stacked vertically. Therefore, the rear end portion of the airbag is prevented from interfering with a D-pillar garnish or the like, and the rear end portion is deployed smoothly.

An embodiment will be described below with reference to the drawings.

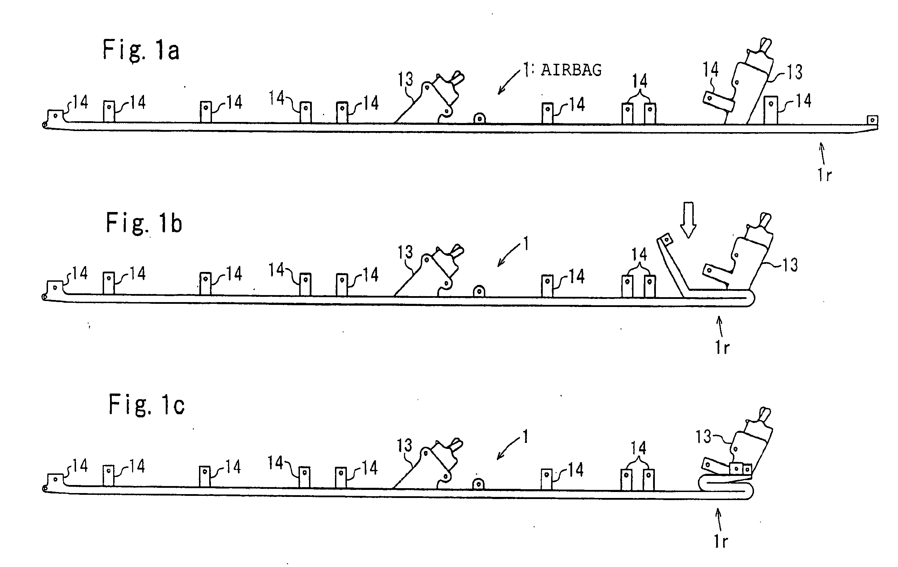

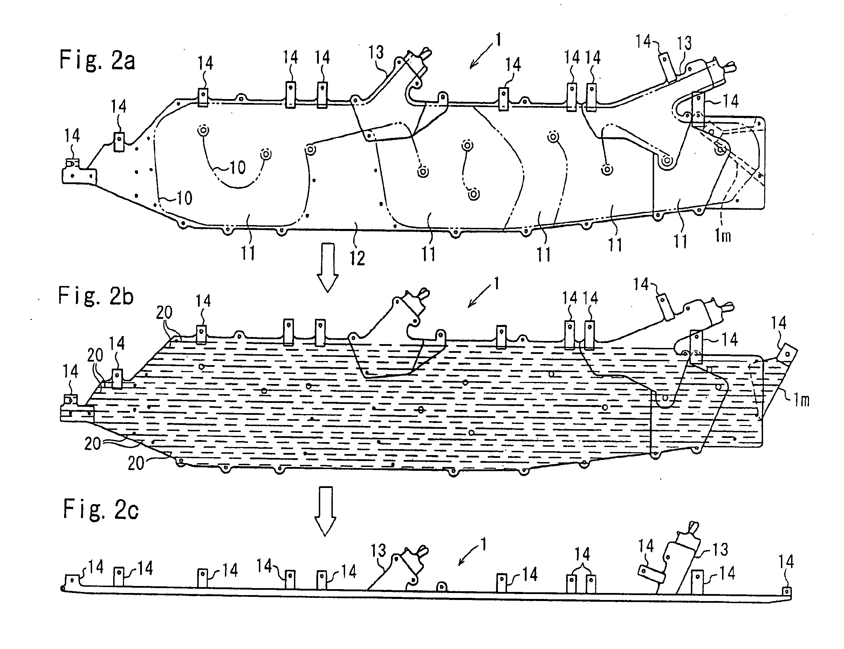

Figs. 1a, 1b, and 1c are side views showing a procedure for folding an airbag in a vehicle-occupant restraint system according to the embodiment, Figs. 2a, 2b, and 2c are explanatory views showing the procedure for folding the airbag, and Fig. 3 is a side view of the interior of a compartment of a vehicle equipped with the airbag. In the following description, "front and rear" correspond to the front and rear of a vehicle body.

As shown in Fig. 3, a body of the vehicle equipped with the vehicle-occupant restraint system includes, for example, A to D pillars 2A to 2D and a roof side rail 3, in the above-described manner shown in Fig. 4. A D-pillar garnish 6 (not shown in Fig. 3) is attached to the D-pillar 2D. A roof lining (not shown) is provided along the ceiling of the vehicle body.

The vehicle-occupant restraint system includes a curtain airbag 1 folded in a long and narrow form, and an inflator 4 for inflating the airbag 1.

The airbag 1 extends from the adjacency of an upper part of the A-pillar 2A to the adjacency of an upper part of the D-pillar 2D via the roof side rail 3. In the airbag 1, inflating portions 11 and a partial non-inflating portion 12 are formed by sewing a plurality of base cloths at seams 10, and gas is introduced from the inflator 4 into the inflating portions 11 through gas inlets 13 provided at the top of the airbag 1.

The inflating portions 11 extend from the top to bottom of the airbag 1.

A plurality of ears 14 protrude from the airbag 1 at regular intervals, and these ears 14 are secured to the roof side rail 3 by fasteners (not shown) such as bolts or rivets. The airbag 1 has a size such as to cover almost the entire aperture of the side window from the adjacency of the A-pillar 2A to the adjacency of the D-pillar 2D when inflated.

After a rearmost end 1m of the airbag 1 is folded forward while the airbag 1 is extended flat, as shown in Fig. 2a, most of the rearmost end 1m is folded so that the rearmost ear 14 projects rearward, as shown in Fig. 2b. The airbag 1 is then folded like a bellows and in a zigzag multiple times (for example, 10 to 30 times) along front-rear folding lines 20 shown in Fig. 2b, and is thereby shaped into a long and narrow primary folded unit, as shown in Fig. 2c. The primary folded unit is tied with, for example, a breakable tape, and its shape is retained.

As shown in Figs. 1a and 1b, a rear end portion 1r of the long and narrow primary folded unit of the airbag 1 is first folded forward and upward once, and a leading end of the folded portion is then folded upward and rearward, as shown in Figs. 1b and 1c. Consequently, the rear end portion of the airbag 1 is folded in three layers stacked on the upper side thereof so as to form a final folded unit. That is, the rear end portion 1r of the primary folded unit is first folded forward and upward once to form a first folded portion, and the first folded portion is folded upward and rearward once to form a second folded portion, thus forming the final folded unit of the airbag. The rear end portion 1r folded in three layers is tied with a breakable member, such as a tape, and its shape is retained.

After the airbag 1 is folded and the rear end portion 1r is folded in vertically stacked three layers in this way, the airbag 1 is fastened to the vehicle body. The airbag 1 is covered with the roof lining.

In the vehicle-occupant restraint system having this configuration, the inflator 4 starts, for example, in the event of a collision or a rollover of the vehicle, and the airbag 1 starts inflation. The airbag 1 starts to be inflated into the vehicle compartment while pushing the roof lining open, and then is inflated and deployed along the side face of the vehicle compartment.

In this vehicle-occupant restraint system, the rear end portion 1r of the airbag 1 is folded upward twice to form thee layers, and the rear end portion 1r is smoothly deployed without interfering with the D-pillar garnish. Even when an occupant is sitting on the third-row seat out of position in a manner such as to lean against the window, the rear end portion 1r of the airbag 1 is smoothly deployed between the occupant and the side face of the vehicle body without any influence of the head of the occupant.

The above-described embodiment is an example of the present invention, and the invention is not limited to the embodiment. For example, one, or three or more inflators may be provided.

## Claims

1. A vehicle-occupant restraint system comprising:
a folded airbag (1) mounted along an upper peripheral edge of a window an a side face of a vehicle; and
at least one inflator (4) for inflating the airbag (1),
**characterized in that**
the airbag (1) is folded like a bellows and in a zigzag multiple times along front-rear folding lines (20) so as to be shaped into a long and narrow primary folded unit, and a rear end portion (1r) of the primary folded unit is folded in three layers stacked vertically on the upper side thereof.

2. The vehicle-occupant restraint system according to claim 1, wherein the airbag (1) is disposed such that the rear end portion (1r) is deployed along a D-pillar (2D).

3. The vehicle-occupant restraint system according to claim 1 or claim 2, wherein the primary folded unit is tied with a breakable material so as to retain a shape thereof.

4. The vehicle-occupant restraint system according to claim 3, wherein the breakable material is a tape.

5. The vehicle-occupant restraint system according to any one of claims 1-4, wherein the rear end portion (1r) of the primary folded unit is first folded forward and upward once to form a first folded portion, and the first folded portion is folded upward and rearward once to form a second folded portion.

## Patentansprüche

1. Fahrzeuginsassenrückhaltesystem umfassend:
einen gefalteten Airbag (1), welcher entlang eines oberen Umfangsrands eines Seitenfensters eines Fahrzeugs angebracht ist; und
zumindest einen Gasgenerator (4) zum Aufblasen des Airbags (1),
**dadurch gekennzeichnet,**
**dass** der Airbag (1) wie ein Faltenbalg und zickzack-artig mehrmals entlang von vorne nach hinten verlaufenden Faltlinien (20) so gefaltet ist, dass er in einer langen und schmalen primär gefalteten Einheit geformt ist, und ein hinterer Endabschnitt (1r) der primär gefalteten Einheit in drei Schichten, welche senkrecht auf der oberen Seite davon gestapelt sind, gefaltet ist.

2. Fahrzeuginsassenrückhaltesystem nach Anspruch 1,
wobei der Airbag (1) so angeordnet ist, dass der hintere Endabschnitt (1r) entlang einer D-Säule (2D) eingesetzt ist.

3. Fahrzeuginsassenrückhaltesystem nach Anspruch 1 oder Anspruch 2,
wobei die primär gefaltete Einheit mit einem zerbrechlichen Material zusammengebunden ist, um eine Form davon beizubehalten.

4. Fahrzeuginsassenrückhaltesystem nach Anspruch 3, wobei das zerbrechliche Material ein Band ist.

5. Fahrzeuginsassenrückhaltesystem nach einem der Ansprüche 1-4,
wobei der hintere Endabschnitt (1r) der primär gefalteten Einheit als erstes einmal nach vorne und oben gefaltet ist, um einen ersten gefalteten Abschnitt auszubilden, und der erste gefaltete Abschnitt ist einmal nach oben und nach hinten gefaltet ist, um einen zweiten gefalteten Abschnitt auszubilden.

## Revendications

1. Système d'immobilisation d'un occupant dans un véhicule, comprenant :
un coussin gonflable de sécurité (1) plié, monté le long d'un bord périphérique supérieur d'une fenêtre, sur une face latérale d'un véhicule ; et
au moins un gonfleur (4), pour gonfler le coussin gonflable de sécurité (1),
**caractérisé en ce que**
le coussin gonflable de sécurité (1) est plié comme un soufflet et plusieurs fois en zigzag, le long de lignes de pliage avant-arrière (20), de manière à être conformé en une unité pliée primaire longue et étroite, et une partie d'extrémité arrière (1r) de l'unité pliée primaire est pliée en trois couches, empilées verticalement sur son côté supérieur.

2. Système d'immobilisation d'un occupant dans un véhicule selon la revendication 1, dans lequel le coussin gonflable de sécurité (1) est disposé de manière que la partie d'extrémité arrière (1r) soit déployée le long d'une colonne D (2D).

3. Système d'immobilisation d'un occupant dans un véhicule selon la revendication 1 ou la revendication 2, dans lequel l'unité pliée primaire est sanglée avec un matériau fracturable, de manière à conserver sa forme.

4. Système d'immobilisation d'un occupant dans un véhicule selon la revendication 3, dans lequel le matériau fracturable est un ruban.

5. Système d'immobilisation d'un occupant dans un véhicule selon l'une quelconque des revendications 1 à 4, dans lequel la partie d'extrémité arrière (1r) de l'unité à pliage primaire est d'abord pliée une fois vers l'avant et vers le haut, pour former une première partie pliée, et la première partie pliée est pliée une fois vers le haut et vers l'arrière, pour former une deuxième partie pliée.
